Europäisches Patentamt

European Patent Office

Office européen des brevets

(19)

(11) Veröffentlichungsnummer: **0 346 557**
**A1**

## (12) EUROPÄISCHE PATENTANMELDUNG

(21) Anmeldenummer: **88810153.2**

(22) Anmeldetag: **11.03.88**

(51) Int. Cl.4: **G01K 1/14**

Die Bezeichnung der Erfindung wurde geändert (Richtlinien für die Prüfung im EPA, A-III, 7.3).

(30) Priorität: **11.03.87 FR 8703592**

(43) Veröffentlichungstag der Anmeldung:
**20.12.89 Patentblatt 89/51**

(84) Benannte Vertragsstaaten:
**AT BE CH DE ES GB GR IT LI LU NL SE**

(71) Anmelder: **Kaiser, Elmar**
**6 Route de Meyrin**
**CH-1202 Genève(CH)**

(72) Erfinder: **Kaiser, Elmar**
**6 Route de Meyrin**
**CH-1202 Genève(CH)**

(54) **Kombiniertes Fahrzeugornament mit Kühler-Thermometer-Verschluss.**

(57) Sinn und Zweck der Erfindung ist,ein kombiniertes Fahrzeug Ornament mit integriertem Thermometer bereit zustellen,der Lufstrom-Themperatur Messangaben dem Fahrer übermittelt und unter Berücksichtigung der Sicherheit ohne Montage/Beschädigung auf jedes Vehicle was sich fortbewegt, geklebt/verschraubt werden kann.

FIG. 2

EP 0 346 557 A1

Die gezeigte Erfindung betrifft ein kombiniertes Autoemblem mit integriertem Aussenthermometer und ein Support der wahlweise geklebt oder verschraubt auf ein Karrosserieteil eines Vehicle (jeder Art) montiert werden kann.

Wie bereits Bekannt, sind viele Erfindungen von Aussenthermometer -Instrumente für Vehicle bereits entstanden, die jedoch das Problem der schnell, preziesen und permanenten Luftstrom-Themperatur-Anzeigen-Messwerte während des fahrens , nicht zufriedenstellend gelöst werden konnte.

Wenn es gestattet ist, hierzu einige Beispiele dieser Behauptung zu den nachfolgenden Patenten, die aber nicht im Sinne einer Be-oder Abwertung zu verstehen ist, sondern nur Bemerkungen von intensiven Untersuchungen der einzelnen Erfindungen mit Respect der Zeitabschnitte (1925 - 1983), die diese Erkenntnisse gebracht haben.

### I siehe Plein, US Pat.Des.No.66,778

Die Function sowie das Design und der Support stehen in keiner Ubereinstimmung, da die Thermometer Konstruction für ein Vehicle-Radiator bestimmt ist und die Wasserthemperatur gemessen wird. Weder die Befestigungseinrichtung (Support) noch die preziese Messbarkeit einer Aussenthemperatur (Luft) stehen im Einklang mit der bestehenden Application. Ubereinstimmung ist nur im relativen Wortlaut der Erfindung "ORNAMENT DESIGN MIT THEMPERATUR ANZEIGE FUR VEHICLE" zusehen.

### II siehe Durland,US Pat.Des.No.69,873

Die selbe Ungleichheit wie die Beschreibung bei Plein,Des.Pat., jedoch Annäherung des Wortlaut der Erfindung:
"COMBINIERTES VEHICLE ORNAMENT MIT KUHLER-THERMOMETER-VERSCHLUSS".

### III siehe Bradley, US Pat.No.2235,252

Diese Konstruction eines Aussenthermometer-Instrument kommt der laufenden Application am nächsten, jedoch bestehen durch Bauart, Messgenauigkeit und Befestigungseinrichtung speziell für Vehicle, erhebliche Unterschiede. Im Detail: Bradley verwendet zum Messen und Anzeigen der Themperatur zwei oder mehrere Metallbänder (Federn) siehe (Fig.6 parts 8 und Zeile 20), die im Zentrum (Fig.6 parts 7/9) fest mit dem Gehäuse (Fig.5 parts 1) verbunden sind. Danach werden die Metallbänder mit dem Zeiger (Fig.5 parts 7/8/12/13) fest in ein Gehäuse (Fig.5 parts 1/2/3) luftdicht umschlossen und verklebt. (siehe Zeile 35)

Als Support diehnt z.B.das Befestigen der Rückwand an eine Festerscheibe, (Fig.3 parts 4) und als einzige Möglichkeit der Befestigungskonstruction ist der Support in (Fig.5 parts 1/2/3) angegeben.

Somit muss der Aussenthermometer an eine leitende Masse wie z.B. Glass,Eisenring ect. befestigt werden und damit ist ein rasch anzeigender themperarur Wechsel nicht möglich. Darüber hinaus,hat das Gehäuse in (Fig.5 parts 1/2/3) keine Frischluftzufuhr in Form eines Loches, um die Themperatur frei zirkulieren zulassen und dadurch entsteht ein Vacuum der die tatsächliche Aussenthemperatur ferfälscht.

Weiterhin ist eine genaue Regulierung bzw.Einstellung der Feder (Fig.5 parts 7/8/12/13) nicht möglich, da der Support der Feder (FIG.6 parts 7) fest mit dem Gehäuse (Fig.5 parts 1) verbunden ist.

Zusammenfassend ist zu Bemerken, das Bradley's Erfindung in dieser gezeigten Form (Konstruction), der laufenden Application nicht Stand halten kann, da es um rasche,preziese Erkennung von themperatur Schwankungen beim fahrenden Vehicle geht,um bei dem heutigen Verkehr die Sicherheit zu gewährleisten.

### IV siehe Whittier,US Pat.No.2447,382

Auch bei dieser Konstruction eines Thermometers besteht keinerlei Ubereinstimmung, da es sich nicht um ein Aussenthermometer für Vehicle handelt.(siehe Fig.1-4 und Beschreibung Zeile 5/collone 1)

### V siehe Daimler Benz GB Pat.No.831,615

Bei dieser Erfindung handelt es sich nur um eine Befestigungskonstruction eines Vehicle Ornament. Es sind daher keinerlei Ubereinstimmungen einer Befestigungseinrichtung (Support) in dieser Art zu erkennen. Wir weisen auf die genaue und ausführliche Beschreibung unserer Befestigungskonstruction des SUPPORT (Fig.2 parts 7) in der laufenden Application hin.

### VI siehe Wilfert,US Pat.No.3968,977

Gleicher Kommentar wie Daimler Benz,da diese Befestigungseinrichtung bereits durch die laufende Application überholt ist.

VII siehe Huebscher,US Pat.No.4416,553

Bei dieser Einrichtung eines Innen und Aussenthermometer-Instrument, der in Serie bereits im Vehicle und am Amaturenbrett fest verankert ist,sowie vom material-elektro-technischem Aufwand,nur der Wortlaut "THEMPERATUR MESSGERAT" als einzige Gemeinsamkeit zu erkennen. Da diese Art von Konstruction bereits bei vielen Testergebnissen (Technische Messinstitute ect.) bewiesen haben, das nicht schnell undpreziese genug,die reale/wirkliche Luftstrom-Themperatur beim fahrendem Vehicle angezeigt wird.Der Beweis dieser Tatsache ist in der laufenden Application sowie zu Bradley's Bemerkungen (Seite 2) beschrieben,da die Beeinflussung der Luftstrom-Themperatur bei jeglicher Verkleidung,sowie Masse eines Material,logische Verzögerungen und daher ungenaue Messwerte permanent während des fahrens angezeigt werden.

Bemerkung:

Die nachfolgenden Bemerkungen der Patente beziehen sich speziell auf den Recherchenbericht FA 393 166 vom 05.11.1987.

VIII siehe Christensen,Pat.No.2878,673

Bei dieser im Verhältniss aufwändigen Konstruction einer Befestigungseinrichtung auf Autoantennen mit integriertem Thermometer ist zu erkennen,das der Versuch einer besseren Isolation gegen die Masse eines Karrosserieteil für die Messung des Luftstrom bei fahrenden Vehicle gemacht wurde, jedoch bestehen wesendliche Unterschiede zur laufenden Application.

Wie zu erkennen,ist in (Fig.2 parts 19/19a/28) die Masse der Verkleidung am Thermometer verankert/verbunden und mit den Teilen in (Fig.2 partds 24/27) fest umschlossen. Da keine Be- und Endlüftung vorgesehen ist, endsteht ein Vacuum innerhalb der Verkleidung des Thermometer. Weiterhin kann keine Korrektur der Ein-oder Nachstellung der Messeinheit erfolgen um danach preziese Messwerte zu erhalten,da keine Justierschraube vorgesehen ist.

Zusammengefasst ergibt diese Konstruction eine ungenügende Messbarkeit des Luftstrom während der Fahrt,da die Befestigungseinrichtung sowie die Masse der Verkleidung und das entstehende Vacuum, keine schnell,permanente und damit auch preziese Messwerte ergeben kann,die der heutigen Sicherheit entspricht.

IX siehe Brochard,FR Pat.No.1548,986

Bei der Erfindung des Aussenthermometer-Instrument für Vehicle ist festzustellen,das keine genauen Darstellungen der (Fig.1-7) sowei die Beschreibung der Befestigungseinrichtung ersichtlich ist. Es ist daher zusammenfassend zu Bemerken,das bei dieser Konstruction eines Thermometer, Material(Massen) sowie Verkleidung des support auf ungenaue Funkzion der Messwerte schliessen lassen und daher mit der laufenden Application in keine Ubereinstimmung zu bringen ist.

X siehe Lafont,FR Pat.No.1549,498

Auch bei Lafont sind die selben Befestigungsmerkmale einer Berührung der Thermometer-Messeinheit unmittelbar an einem Glass (Fig.2 parts 2) sowie bei der Verkleidung (Fig.2 parts 1) zu erkennen. Eine genaue und preziese Messbarkeit des Luftstrom -Themperatur-Messwert ist in dieser Konstructionsform unmöglich, da die Anzeige in (Fig.3 parts 5) zu breit konstruiert ist, um eine preziese Messangabe (Gradeinheit) zu erziehlen. Somit ist eine Ubereinstimmung mit der laufenden Application in diesem Sinne nicht zusehen.

XI siehe Stortz,US Pat.No.4218,917

Bei dieser Erfindung eines Aussenthermometer für Vehicle kommt die Luftzirkulation (Fig.5 parts 56) sowie die Befestigungseinrichtung(Fig.6 parts 62),der laufenden Application Fig.2 parts 23 im Sinne der Befestigung auf ein Karrosserieteil mit doppel Klebband entgegen. Jedoch sind Messeinheit (Technik),Anzeigenübersicht (klares Erkennen des Fahrer bei Nässe z.B.),relative aufwändige Befestigungskonstruction der Messeinheit in der Verkleidung sowie Zerbrächlichkeit bei relative kleinen Stössen/Schlag der Messeinheit und der nicht korregierbarkeit bei Montage/Ein oder Nachstellung der Messwerte,als nicht gleichwärtige Konstruction zu erkennen.

Zusammenfassend ist zu Bemerken, das Stortz das Isolations-Befestigungs-und Luftzikulations-Problem des realen/effektiven Luftstrom-Themperatur-Messwert beim fahrenden Vehicle sowie Verkleidung, die Luftstrom-Unterbrüche verursachen, nicht zufriedenstellend gelöst hat.

XII siehe Hawkins,US Pat.No.4336,712

Bei dieser Konstruction eines Aussenthermometer für Vehicle Verweisen wir auf die Bemerkung bei Stortz,da die gleichen Probleme zu erkennen sind und somit nicht in Ubereinstimmung mit der laufenden Application zu sehen ist. In Ergänzung zu dem Problem der Messeinheit/Technik dieser Erfindungen verweisen wir auf die Bescheibung im speziellen: Huebscher,und im allgemeinen auf Whittier,Bradley,Durland und Plein.

XIII siehe Kaiser EP Pat.Applic.0117,840

Es ist zu Bemerken, das es sich bei der Erfindung um ein Vehicle-Ornament mit rotierbaren Werbeträger und tradizioneller Befestigungskonstruction handelt und somit in keiner Weise der laufenden Application,Ubereinstimmungen zu erkennen sind.

Im speziellen währe der Support (Befestigungseinheit (Fig.5 parts 1/2/2a/12/11/13) genannt, der bereits durch die laufende Application in Fig.2 parts7 überholt ist.(Keine aufwändige Montage ect.)

Bemerkung:

Zum besseren Verständniss sind jeweils die Zeichnungen der Erfindungen nachfolgend mit I - XIII bezeichnet.

Die nachfolgende Schriftform der Beschreibung der laufenden Application :VEHICLE ORNAMENT MIT INTEGRIERTEM THERMOMETER, bitten wir zu entschuldigen und gegebenenfals nach EPA-Norm zu korrigieren wenn es gestattet ist.

Beschreibung:

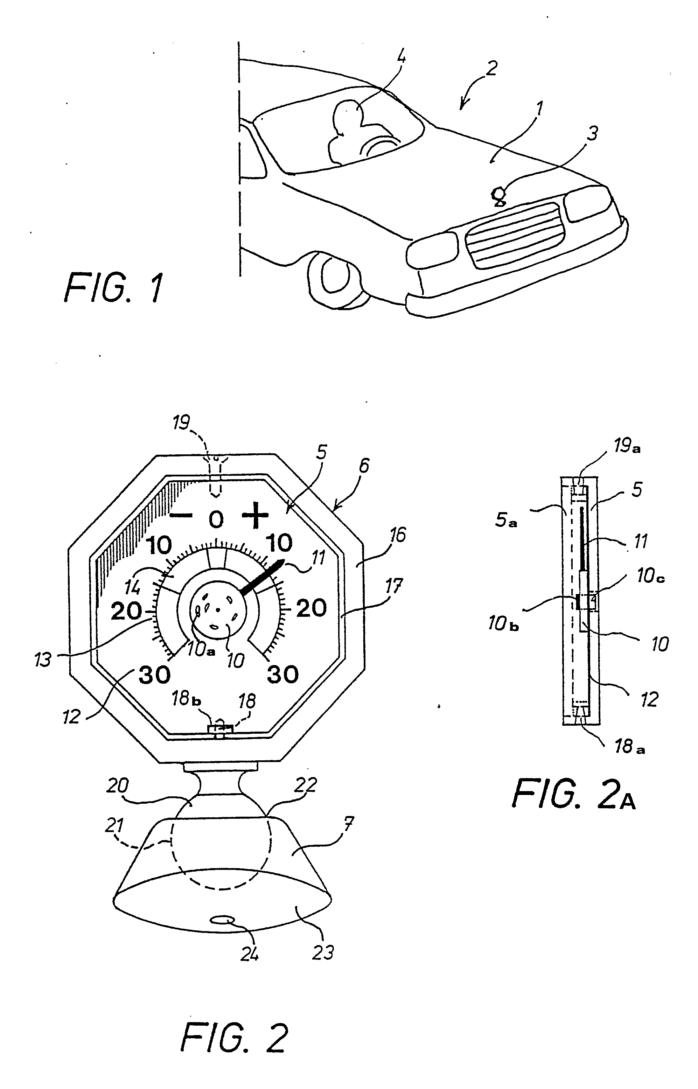

Kaiser verwendet zum Messen und Anzeigen der Aussenthemperatur eine Messeinheit,bestehend aus einem Metallband (Spiralfeder 300 Grad Messbereich -50 +50 Celsuis) Fig.2 parts 10;ein an die Spiralfeder angeschweisster Plastikzeiger Fig.2 parts 11;Vibrationsfett/Oel für die Stabilisation der Spiralfeder mit Zeiger während der Fahrt Fig.2 parts 10a; sowie eine Buchse aus Messing die fest mit der Spiralfeder in der Achse verbunden ist (siehe Fig.2a parts 10b), und ein Stellbolzen/Justierschraube zum Ein oder Nachstellen der Themperatur Fig.2a parts 10c.

Der Stellbolzen/Justierschraube in Fig.2a parts 10c hat drei Funktionen zu erfüllen. Erste Funktion ist die Halterung der Buchse mit der Spiralfeder und dem Zeiger Fig.2a parts 10b/10/11. Zweite Funktion ist die Halterung der Messeinheit (Spiralfeder mit Buchse und Zeiger) in der Achse vom Zifferblatt Fig.2a parts 12. Dritte Funktion ist zum Einstellen/korrigieren bei ungenauer Montage,oder nachträglichen Einstellen der Themperatur bestimmt.

Das Zifferblatt Fig.2 parts 12 besteht aus Alluminium mit einem Achsenloch für den Stellbolzen/Justierschraube, sowie ein farbig eingebrannter Scalen-Messbereich von -50 +50 Grad Celsius Fig.2 parts 14 und Gradeinteilung Fig.2 parts 13. Bewusst ist die kritische Zone von 0 Grad Celsius vom gesammten 300 Grad Messbereich oben in der Mitte des Zifferblatt angeordnet Fig.2 parts 13.

Diese Einteilung ist unter dem Sicherheitsfactor berücksichtigt und so festgelegt,das der Fahrer eines Vehicle Fig.1 parts 4 eine Distanz auf der Motorhaube von ca.2 meter Fig.1 parts 1/2/3 hat und noch gut sichtbar die Messwerte erkennen kann und somit die kritische Zone nicht suchen muss.

Bemerkung:

Jegliche, auf dem heutigen Markt befindlichen Aussenthermometer für Vehicle, haben diese Aufteilung des Messbereich nicht,da sie nur für kurze Distanzen zum Fahrer konzipiert sind.- (z.B.Glassscheiben,Amaturenbrett ect.)
Das Gehäuse Fig.2a parts 5/5a besteht aus zwei hochwertigen Plastikschalen die die angegebenen Messwerte auf dem Zifferblatt ohne Verformung überstehen,resistieren.( +20% Hitzebeständigkeit)

In der einen Schale Fig.2a parts 5 ist das Zifferblatt mit der Messeinheit Spiralfeder mit Buchse,Zeiger und Stellbolzen/Justier schraube eingebettet.Gleichzeitig sind in der Achse oben und unten, kegelförmige Aushöhlungen vorgesehen Fig.2a parts 18a/19a,die zur Fixierung am Rahmen Fig.2 parts 16 benötigt werden.

Die zweite Schale Fig.2a parts 5a diehnt als Verschluss (Deckel) und ist an der unteren Achse Fig.2 parts 18b mit einer Aussparung für die notwendige Luftzirkulation versehen.Weiterhin sind vier Abstandsbolzen für die Arretierung des Zifferblatt beim einpressen in die Schale Fig.2a parts 5 vorgesehen.

Der Rahmen Fig.2 parts 16 der aus Zinkdruckguss besteht und in dem das Gehäuse Fig.2a parts 5/5a an der unteren Achse Fig.2 parts 18 in ein Zapfen des Rahmens eingehängt ist,sowie gleichzeitig an der oberen Achse eine Achsenschraube durch den Rahmen fig. 2 parts 19 das Gehäuse mit Deckel befestigt wird.

Die vorliegende Konstruction erlaubt das drehen des Gehäuse mit Deckel in jede beliebige Position zum Fahrer Fig.1 parts 3/4. Weiterhin ist bei dieser Befestigungseinrichtung zu erkennen,das keine Themperaturleitung vom Gehäuse mit Deckel zum Rahmen entstehen kann Fig.2 parts 17. Was bedeutet,weder die Masse eines Material ,noch Verkleidungen jeglicher Art die den Luftstrom stöhren oder beeinträchtigen kann,können bei dieser Konstruction die permanente und preziese Messanzeige/Messwerte im Gehäuse mit Deckel, Verfälschungen entstehen lassen.

Bemerkung:

Test's haben ergeben,das schon nach ca. 1Km Fahrt eine Reaction auf Themperaturwechsel/Schwankungen endstehen kann und angezeigt wird.

Die Befestigung des Rahmen mit einem festen Kugelkopf Fig.2 parts 20/16 sowie das complette Gehäuse mit Deckel und Messeinheit Fig.2a ist in einem Kugelbett des Support Fig.2 parts 22/7 mobil (parts 21) eingebettet und nach allen Seiten bei Gefahr/Unfall abkippbar sowie ausklinkbar.

Die Befestigung am Karrosserieteil eines Vehicle kann wahlweise geklebt oder verschraubt werden,da ein doppel Klebband für die untere Seite des Support Fig.2 parts 23 vorgesehen ist oder mit einer Sicherheitsschraube in die Bohröffnung Fig.2 parts 24 verschraubt werden.

Diese Konstruction des Support mit Rahmen und Gehäuse/Deckel und Messeinheit bringt endscheidende Vorteile gegenüber tradizioneller Bauweise im allgemeinen,da der Support nur ein Befestigungsteil für das combinierte Vehicle Ornament mit integriertem Thermometer aufweist/benötigt. Im Besonderen sind hier nur einige wichtige Vorteile genannt:
100% Sicherheit bei Unfällen mit Sach oder Personen,da der Rahmen mit festen Kugelkopf bei Chokeinwirkung/Aufprall aus dem Kugelbett des Support nach allen Seiten ausklinken kann.Bei herkömmlicher, tradizioneller Bauweise mit integrierter Zugfeder auf Motorhauben eines Vehicle,die Verletzungsgefahr beim einhacken/hängenbleiben wesendlich höher ist.
Sehr gute Sicherheit gegen Diebstahl,da der speziell hochwertige Plastik dem Support ein hunderttausend faches aus und einklinken erlaubt.
Keine aufwändige Montage oder Beschädigung der Korrosserie,da mit selbstklebendem doppel Klebband der Support mit Rahmen und Gehäuse/Deckel und Messeinheit befestigt wird.-
(Testgarantie ohne Verschraubung bei Nässe/Hitze/Kälte 210 Km H)
Die Herstellungskosten eines tradizionellen Aussenthermometer mit Befestigungseinrichtung auf der Motorhaube eines Vehicle, werden bei dieser Konstruction auf ein minimum reduziert,da nur neun Teile erforderlich sind.
Die preziese Ein oder Nachstellung/Barkeit der Messeinheit sowie klare Aufteilung der Anzeige des Messbereich und vollständige Isolation der Messeinheit,geben zusammen mit dem Standort auf einer Motorhaube eines Vehicle dem Fahrer schnell,unverfälscht und preziese die permanenten Themperaturschwankungen des Luftstrom beim fahren bekannt,die zur Sicherheit beitragen.

Bitte zu Beachten:

Wir legen zum besseren Verständniss alle neun Teile aus der Manufactur-Serie bei,um damit auf eindrückliche Weise die Einfachheit dieser Konstruction zu dokumentieren.

Beschreibung der Figuren 1/2/2a

Figur 1 zeigt ein perspektivisches Beispiel einer Anordnung (parts 3) auf einer Motorhaube eines Vehicle (parts 1) zum Fahrzeuglenker ( parts 4 ) sowie das gezeigte Distanzbeispiel (parts 2).

Figur 2 zeigt die Frontansicht zum Fahrzeuglenker mit einem Support (parts 7) sowie eine Befestigungsaushöhlung (parts 24)wahlweise für eine Sicherheitsschraube oder mit einem speziellem doppel Klebband für die Fläche (parts 23)-vorgesehen,sowie mit Kugelbett (21). Weiterhin mit einem achteckigen Rahmen (parts 16) versehen, wobei ein Kugelkopf (parts 20) fest mit dem Rahmen verbunden und in das Kugelbett des Support (parts 22) mobil verankert wird.

Der Rahmen (parts 16) hat als Beispiel die Form eines Achtecks (pasrts 6) das jedoch auch ein anderes Design aufweisen könnte, sowie mit einem unteren Achsen-Zapfen (parts 18) un einem oberen Achsen-Loch mit Schraube (parts 19),das für die Befestigung der Messeinheit vorgesehen ist,ausgestattet.

Die Messeinheit besteht aus dem Gehäuse (parts 5),einem Zifferblatt (parts 12) mit Grad Celsius (parts 13) und farbigen Themperatur-Zonen (parts 14).Ein Metallfederband (parts 10) mit verschweisstem plastikzeiger (parts 11) und Spiralfeder-Buchse (parts 10b)mit Stellbolzen/Justierschraube (parts 10c).

Um die Vibration/Stabilisation der Spiralfeder während der Fahrt zu verhindern, ist ein spezial Fett/Oel (parts 10a) vorgesehen, das verhindert,dass der Zeiger mit Spiralfeder die Gradanzeige des Zifferblatt unleserlich macht.

Das (parts 17) zeigt den Zwischenraum der Messeinheit (parts 5) und dem Rahmen (parts16)-,das die Luftstromzirkulation gewährleistet und somit kein Berührungspunkt entstehen kann.Das gleiche gilt auch für das Messgehäuse (parts 5/5a) wobei eine Ausspahrung (parts 18b) im Deckel-

(parts 5a) vorgesehen ist, um die Luftzirkulation auch im Gehäuse der Messeinheit zu gewährleisten.

Figur 2A zeigt einen Querschnitt der Messeinheit bestehend aus dem Gehäuse (parts 5) und dem Deckel (parts 5a),ein Zifferblatt (parts 12) mit Stellbolzen/Justierschraube (parts 10c) und Spiralfeder (parts 10)mit Achsenbuchse für Spiralfeder (parts 10b),sowie ein Zeiger (parts 11).

Eine obere und untere Aushöhlung (parts 19a/18a)im Gehäuse (parts 5) ist für die Befestigung am Rahmen vorgesehen.

**Ansprüche**

1. Anordnung eines combinierten Vehicle-Ornament mit integriertem Thermometeraufsatz (16/18/19/20) und einer Befestigungvorrichtung (7/21/23/24) für den Thermometeraufsatz auf ein Karrosserieteil (1) eines Vehicle,wobei der Thermometeraufsatz aus einer der Befestigungsvorrichtung verbundenen Rahmeneinrichtung (16) und innerhalb der Rahmeneinrichtung eine Thermometer-Messeinheit (5,5a,10,10a,10b, 10c,11,12,13,14,18a,18b,19a) besteht.

2. Anordnung nach Anspruch 1. dadurch gekennzeichnet, dass die Befestigungsvorrichtung (7) ein Kugelbett (21) für den Kugelkopf mit festem Rahmenaufsatz (16/20) aufweist.

3. Anordnung nach Anspruch 1. dadurch gekennzeichnet,dass bei der Befestigungsvorrichtung (7) im Kugelbett (21) der Kugelkopf mit festem Rahmenaufsatz (16/20) mobil nach allen Seiten (22) abklappbar/ausklinkbar gehalten ist.

4. Anordnung nach Anspruch 1. dadurch gekennzeichnet,dass die Befestigungsvorrichtung /7) eine Ebene (23) zum kleben auf ein Karrosserieteil eines Vehicle aufweist.

5. Anordnung nach Anspruch 1. dadurch gekennzeichnet,dass die Befestigungsvorrichtung (7) eine Ausspahrung (24) für eine Sicherheitsschraube aufweist.

6. Anordnung nach Anspruch 1. dadurch gekennzeichnet,dass zwischen Rahmenaufsatz (16) und Messeinheit (5/5a) ein Luftraum (17) ist und die Befestigungsvorrichtung für die Messeinheit durch den unteren Achsenbolzen (18) sowie der oberen Achsenschraube (19) gehalten ist.

7. Anordnung nach Anspruch 1. dadurch gekennzeichnet,dass bei der Thermometer-Messeinheit die Gradeinteilung der Messwerte (12) symetrisch angeordnet ist.

8. Anordnung nach Anspruch 1. dadurch gekennzeichnet,dass das Vehicle - Ornament mit integrietem Thermometer (3) auf ein Karrosserieteil eines Vehicle (1) zum Fahrer (4) so in Position gehalten ist.

EP 0 346 557 A1

**FIG. 1**

**FIG. 2A**

**FIG. 2**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 336 712 (HAWKINS) <br> * Figuren; Spalte 2, Zeile 25 - Spalte 4 * | 1,2 | G 01 K 1/14 |
| X | US-A-2 878 673 (CHRISTENSEN) <br> * Figuren; Spalte 1, Zeile 45 - Spalte 2, Zeile 34 * | 1-3 | |
| X,Y | US-A-4 218 917 (STORTZ) <br> * Figuren; Spalte 3 - Spalte 7, Zeile 42 * | 1-4,7,9 | |
| Y | EP-A-0 117 840 (KAISER) <br> * Figuren; Seite 2, Zeile 36 - Seite 4 * | 1-4,7,9 | |
| A | FR-A-1 549 498 (LAFONT) <br> * Figuren; Seite 2 * | 10 | |
| A | FR-A-1 548 986 (BROCHARD) <br> * Figuren; Zusammenfassung * | | |

RECHERCHIERTE SACHGEBIETE (Int. Cl.4)

G 01 K

Der vorliegende Recherchenbericht wurde für alle Patentansprüche erstellt

| Recherchenort | Abschlußdatum der Recherche | Prüfer |
|---|---|---|
| DEN HAAG | 11-09-1989 | BATTESON A. |